# EUROPEAN PATENT SPECIFICATION

(11) **EP 4 413 644 B1**
(45) Date of publication and mention of the grant of the patent: **04.03.2026**
(21) Application number: 22777343.9
(22) Date of filing: 09.09.2022
(51) Int. Cl.: H02J 7/00, B25F 5/00

(54) **RECHARGING APPARATUS FOR RECHARGING AN ELECTRIC BATTERY**
AUFLADEGERÄT ZUM AUFLADEN EINER ELEKTRISCHEN BATTERIE
APPAREIL DE RECHARGE POUR RECHARGER UNE BATTERIE ÉLECTRIQUE

(30) Priority: 07.10.2021 IT 202100025640
(43) Date of publication of application: 14.08.2024
(73) Proprietor: Emak S.p.A., 42011 Bagnolo in Piano (Reggio Emilia) (IT)
(72) Inventor: BARBOLINI, Gianluca, 41122 MODENA (IT)
(74) Representative: Corradini, Corrado
(86) International application number: PCT/IB2022/058507
(87) International publication number: WO 2023/057841

(56) References cited:
- EP-A2- 2 735 076
- EP-A2- 2 735 077
- EP-A2- 2 735 077
- WO-A1-2021/110461
- WO-A1-2021/110461
- US-A1- 2017 331 162
- US-A1- 2017 331 162

## Description

### TECHNICAL FIELD

The present invention relates to an apparatus for recharging an electric battery, in particular for recharging the battery of electric tools, e.g. for the maintenance of green spaces, provided with an electric motor powered by said battery, such as chain saws, brush cutters, hedge trimmers, blowers, lawn mowers, etc., for example.

### PRIOR ART

Tools, e.g. for the maintenance of green spaces, provided with an electric motor powered by an electric battery, such as chainsaws, brush cutters, hedge trimmers, blowers, lawnmowers, etc., are known.

These batteries, in their inside, can be provided with a monitoring device, comprising an electronic control and command unit and a wireless transmitter, configured to detect one or more operating parameters of the battery to send them to a remote device which processes them and can generate alarms that are intelligible to the tool user based on the monitored values.

For example, it is possible to monitor the residual charge of the battery and send this datum to a remote device by means of a transmitter device present in the monitoring device. This architecture can for example be used to indicate the completion of battery recharging or the current battery charge level.

Document EP2735077 A2 proposes an adapter for a power tool system, which can be connected to a charger and contains a wireless communicator to send battery parameters to an external device for display. Document US2017/331162 A1 describes a battery charger system that monitors battery parameters and uses a wireless transmitter to send this information over a network to a remote electronic device for monitoring and control. Document WO2021/110461 A1 discloses a communications module for a power tool charging device that wirelessly transmits battery operating information to a remote cloud-based computing device for monitoring and analysis.

One problem with this solution is that this monitoring method makes batteries more complex, thus more difficult to design, more expensive and more prone to malfunctioning, since generally an increase in the number of components in an apparatus translates into a greater number of components that can break or generate malfunctions.

An object of the present invention is to overcome the constraints of the prior art in the context of an efficient, rational and cost-effective solution.

This object is achieved by the features of the invention indicated in the independent claim. The dependent claims outline preferred and/or particularly advantageous aspects of the invention.

### DISCLOSURE OF THE INVENTION

In particular, the invention makes available a recharging apparatus for electrically recharging an electric battery (for a battery tool) comprising:
- a battery charger device fitted with a power plug adapted to be electrically connected to a power source,
- an electronic control and command unit galvanically connected to the battery charger device, and
- a wireless transmitter operationally connected to the electronic control and command unit,
wherein the electronic control and command unit is configured to monitor a value indicative of an operating parameter of the battery when it is connected to the battery charger device and to send said value via the wireless transmitter (to a remote device).

Thanks to this solution, the battery is simpler, with fewer components than those of the prior art, therefore less subject to breakages and malfunctions, and at the same time it is possible to monitor it and send the monitored data to a remote device while the battery is being recharged. The aspect of less battery failure is also important from a sustainability point of view, as the disposal of a non-functioning battery is much less costly, both economically and in terms of environmental impact, than the disposal of a non-functioning battery charger device. In addition, the proposed solution allows to reduce the production cost of the battery, which is particularly important considering that both private users and fleets of tools for the maintenance of green spaces generally have multiple batteries and a much smaller number of battery charger devices, for example even just one in the case of private users. Additionally, given the larger number of batteries compared to the battery charger devices, the greater simplicity of the battery allows reducing production times and related costs thereof, while still allowing the monitoring. Finally, the fact that the electronic control unit and the wireless transmitter are part of the recharging apparatus and not of the battery means that the energy of the battery is not consumed for monitoring, thus extending the durability and useful life thereof.

For example, the operating parameter of the battery is at least one between a parameter indicative of the battery temperature and a parameter indicative of the charge percentage.

In this way, the main operating parameters of the battery are monitored, which allow providing information on the available operating time of the battery, e.g. starting from the charge percentage, and on the health of the battery, starting both from the recharge percentage, e.g. reached over a certain time, and starting from the temperature, as excessive temperatures can be indicative of structural problems with the battery or of improper use or even too hot recharging locations.

The recharging apparatus comprises a remote device. In this case, the electronic control and command unit is configured to send the value indicative of the operating parameter to the remote device, which remote device is configured to monitor the received operating parameter value and to display the received operating parameter value and/or to generate an alert signal (intelligible to a user) based on the received operating parameter value.

This makes it possible to actively inform the user about the monitored data and/or to generate alarms if abnormal situations are detected, or reminders, thus making it possible to extend the useful life of the batteries and/or not to delay operations with tools provided with these batteries.

According to another aspect of the invention, the operating parameter monitored by the electronic control and command unit may be the parameter indicative of the charge percentage. In this case, the remote device may be configured to calculate a battery discharge time interval at a predetermined residual percentage based on a last received value of the parameter indicative of the charge percentage and to selectively generate an alarm signal based on at least said discharge time interval.

This reminds the user to recharge the battery, both to avoid having a flat battery when the tool is needed to be used, which would delay works, and to prevent the battery from being over-discharged, with the risk of damage and premature loss of the storage capacity for which it was designed, i.e. its useful life will be reduced.

According to yet another aspect of the invention, the operating parameter monitored by the electronic control and command unit may be the parameter indicative of the charge percentage. In this case the remote device is configured:
- to calculate a battery discharge time interval at a predetermined residual percentage based on a last received value of the parameter indicative of the charge percentage
- to (cyclically) connect to an additional remote weather forecasting device,
- to monitor the status of the weather forecast for a next day, said status being between cloudy, rainy and sunny,
- to generate an alert signal when the forecast status for that next day is cloudy or sunny and when the residual charge expected for that day is less than a predetermined percentage.

This allows the user to be warned, on days when he could potentially use the tool, that he must recharge the battery beforehand if he wants to use the tool on those days, otherwise works will be delayed or impossible due to the need to charge the battery.

According to yet another aspect of the invention, the operating parameter monitored by the electronic control and command unit may be the parameter indicative of the battery temperature, and the remote device may be configured to generate an alert signal when the value of the parameter indicative of the battery temperature exceeds a predetermined threshold value.

Thanks to this solution, the user can be informed about possible dangerous conditions of the battery.

Again when the operating parameter is the parameter indicative of the battery is the parameter indicative of the temperature, according to a different aspect of the invention, the electronic control and command unit may be configured to cyclically detect the value of the parameter indicative of the temperature of the battery as soon as the battery is connected to the battery charger device, and the remote device may be configured to generate a preset alert signal when the temperature, in a predetermined time interval starting from the moment in which the battery is connected, exceeds a predetermined threshold value.

When the battery is excessively hot in the moment in which it is connected to the battery charger for recharging, it means that it has been kept in an excessively hot place, or, when it is recharged immediately after being used, it means that the battery is undersized for the tool and for the usage to which it has been connected. Sending an alert signal to signal this condition allows avoiding both an early reduction in battery useful life and possible damages to the tool to which the battery is connected, caused by temperatures higher than those for which it was designed.

Again when the operating parameter is the parameter indicative of the battery is the parameter indicative of the temperature, the electronic control and command unit may be configured to cyclically detect the value of the parameter indicative of the battery temperature while recharging and to cyclically send the detected value to the remote device, and the remote device may be configured to calculate the average or median temperature while recharging the battery and to generate a (further) preset alert signal when the calculated average or median temperature exceeds a predetermined threshold value.

When the temperature of the battery while recharging, for example throughout the recharging cycle intended as a low battery to full battery process, is too high, this may mean that either the place where recharging is taking place is too hot, or that the battery is unbalanced, that is, it has an internal electrical resistance that is too high, therefore it is defective, and it is convenient to replace it. Also in this case, sending an alert signal to signal this condition avoids both an early reduction in the battery useful life and any damages to the tool to which the battery is connected, caused by temperatures higher than those for which it was designed and due to the too high electrical resistance of the battery.

According to another aspect of the invention, the remote device may be configured to store the values of the operating parameter during each connection of the battery to the battery charger device, to calculate a median or average value of the operating parameter based on the values acquired during a first set of connections of the battery to the battery charger device, and to generate an alert signal when the average or median value of the operating parameter in a successive connection of the battery deviates from the calculated average or median value by more than a predetermined percentage value.

This allows the user to be warned of any changes in the performance of the battery during recharging, which may be indicative of a premature deterioration. Consequently, the apparatus thus allows the user to be made aware of possible problems so that he can remedy them promptly and so as to avoid delays in works or damages to tools.

Another way to achieve these advantages is to carry out a usage profiling.

For example, an aspect of the invention may provide that the remote device may be configured (to store the moment in which the battery has reached a predetermined charge percentage) to calculate the time elapsed between two successive moments in which the battery has reached a predetermined charge percentage, to repeat this calculation for a predetermined subsequent number of recharges of the battery, to calculate an average value of the time intervals lapsed between two successive moments in which the battery has reached a predetermined charge percentage of the predetermined subsequent number of recharges, and to generate an alert signal based on this average time interval between two successive moments in which the battery has reached a predetermined charge percentage.

The invention further makes available a kit comprising an electric tool, provided with an electric battery adapted to power it, and a recharging apparatus according to claim 1 for electrically recharging said battery.

### BRIEF DESCRIPTION OF THE DRAWINGS

Further features and advantages of the invention will be more apparent after reading the following description provided by way of a non-limiting example, with the aid of the accompanying drawings.

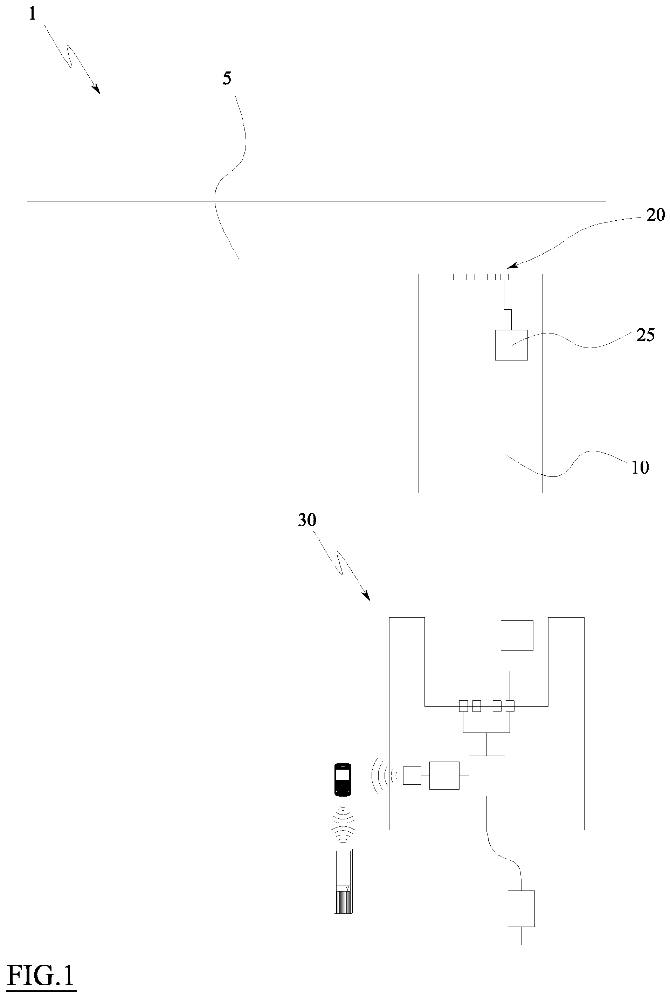

Figure 1 is a schematic view of a kit according to the invention comprising a battery powered electric tool and a battery recharging apparatus.

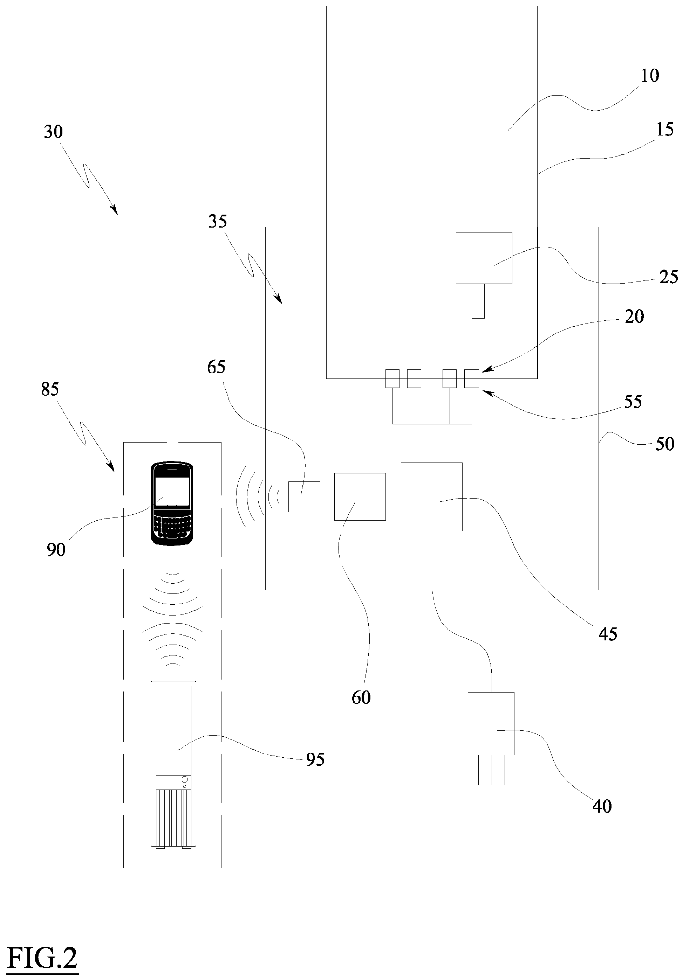

Figure 2 is a schematic view of the apparatus according to the invention.
Figure 3 is a schematic view of another embodiment of the apparatus according to the invention.

### BEST MODE TO IMPLEMENT THE INVENTION

With particular reference to said figures, a kit comprising a tool 5, preferably specific for the maintenance of green spaces, provided with an electric motor for operating the tool and an electric battery 10 of a removable type, i.e. it can be fixed in a removable way to the body of the tool, for powering said electric motor, has been globally indicated by 1. The tool can, for example, be any one of a chainsaw, a brush cutter, a hedge trimmer, a blower, a lawnmower, a trimmer, a walking tractor, a drill, a milling machine, a hacksaw or a screwdriver.

The battery 10, for example of the chemical energy storage type, is provided with a protective box-shaped casing 15, preferably provided with quick coupling/release means for fixing it in a removable way to the tool.

The protective box-shaped casing 15 is made of an electrically non-conductive material, for example a polymeric material.

The battery is also provided with at least one electrical connector 20 that protrudes externally to the casing to allow the electrical connection to the tool in order to power supply it.

It should be noted that an electrical connector is defined as a connector which enables a galvanic (not wireless) electrical connection to be established between two electrical or electronic devices, each fitted with a connector that can be coupled to the connector of the other device.

There may also be several connectors or the connector may be made in several portions. For example, typically the electric batteries for electric tools comprise a plurality of slats placed side by side and made of an electrically conductive material. Alternatively, the connector might be of the cylindrical type. The connectors must have at least two portions, one of which forms a positive pole and the other forms a negative pole.

Furthermore, the battery may comprise a sensor 25 configured to measure a value of a parameter indicative of the temperature of the battery, for example to measure a value of the temperature of the battery. Preferably, this sensor is housed inside the casing and can be connected to the external environment to transmit the measured values either by means of the electrical connector 20 or by means of its special electrical connector independent of the electrical connector 20.

The kit 1 further comprises a recharging apparatus 30 for electrically recharging the battery 10, adapted to be connected to an electric power source, such as for example an electric power distribution network, to recharge the battery.

In particular, the recharging apparatus 30 is preferably made as a separate body from the tool body.

The recharging apparatus comprises a battery charger device 35 adapted to be connected to the electric power source, for example by means of a power supply plug 40, to recharge the battery.

In particular, it comprises an electronic monitoring and command unit 45 configured to carry out the battery recharging process (in the sense of transferring energy from the electric power source to the battery).

This electronic monitoring and command unit 45 may be configured to modulate the intensity of the electrical current supplied to the battery during recharging according to the charge percentage of the battery, for example by decreasing the intensity of the current sent to the battery as the charge percentage of the battery increases. In particular, the charge percentage can be determined by detecting the voltage level of the battery. In detail, in order to show the recharge percentage on a display, for example, the voltage value must be converted into a battery percentage based on a preset table (determined experimentally) and possibly stored in the unit.

In the case where the electric power source is the power distribution network, which is of the alternating type, the electronic monitoring and command unit 45 is configured to convert the alternating current of the power distribution network into a direct current suitable for powering the battery.

The battery charger device can comprise a box-shaped casing 50, made as a separate body with respect to the body of the tool, for example inside which the electronic monitoring and command unit is contained (in a non-removable way).

This box-shaped casing 50 may comprise a seat adapted to house at least partially, and possibly to allow the removable fixing to it, for example by means of the coupling/release means, of the battery 10.

The user can then release the battery from the tool and associate it with the box-shaped casing, for example by inserting it in this seat.

The box-shaped casing 50 is made of an electrically non-conductive material, for example a polymeric material.

The recharging apparatus comprises at least one electrical connector 55 configured to be coupled to the electrical connector 20 so as to transfer it at least the electric energy. In particular, it is electrically (galvanically) connected to the monitoring and control unit (which essentially acts as a bridge between the power supply plug and said electrical connector 55).

The electric connector 55 protrudes externally with respect to the box-shaped casing and, if the seat is present, it is located inside it.

The detection of the voltage of the battery by means of the monitoring and control unit can take place for example by measuring it at the electrical connector 55, for example by means of the portions which form a negative pole and those which form a positive pole.

The recharging apparatus comprises an electronic control and command unit 60 galvanically connected to the battery charger device, in particular to the electronic monitoring and command unit 45.

In the embodiments illustrated, these two units are two separate electronic components connected to each other, each provided with its own CPU. However, it is not ruled out that in a different embodiment these two units may be substantially a single unit, for example provided with a single CPU that performs all the functions.

The electronic control and command unit 60 is powered by the electric energy coming from the connection plug and not by the battery electricity, therefore it only works, as well as the electronic monitoring and command unit 45, when the battery charger device is connected to the electric power source.

The recharging apparatus also comprises a wireless transmitter 65 operatively connected to the electronic control and command unit 60. Preferably it is only a transmitter and not also a receiver. However, it cannot be ruled out that it may be a transceiver in the event that the activation of the electronic control and command unit 60 is required via a remote command.

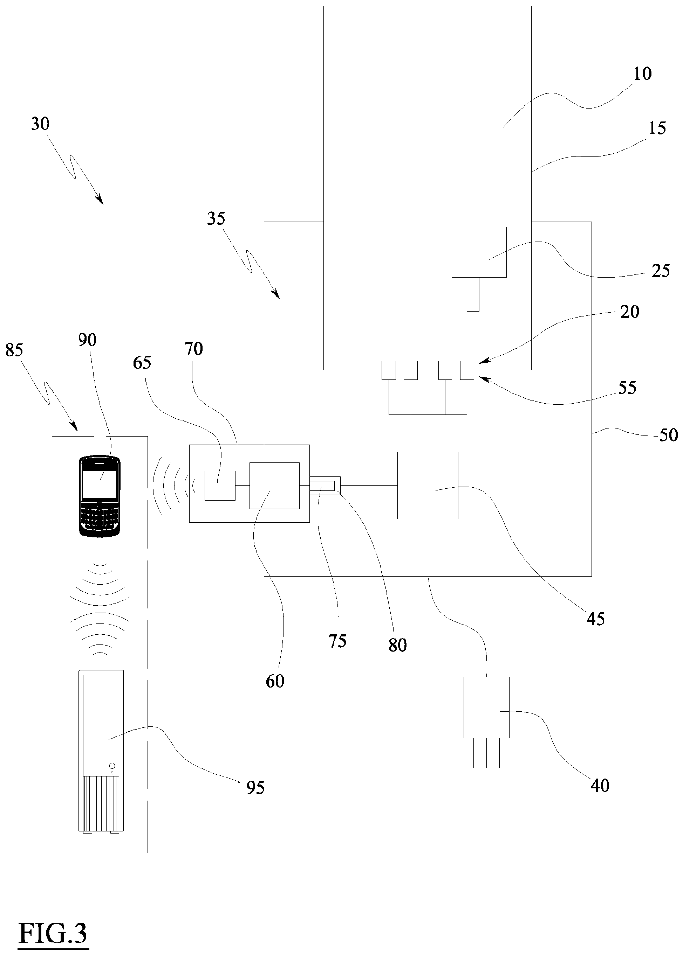

The electronic control and command unit and the wireless transmitter 65 may be located within the battery charger device 35, for example closed inside its box-shaped casing 50, or alternatively, as illustrated in Figure 3, they can be configured as an additional mode provided with its box-shaped body 70 and with an electrical connector 75 to be connected to the battery charger by means of a special electrical connector 80 (different from the one used for recharging the battery) galvanically connected to the electronic monitoring and command unit 45. In the illustrated embodiment, the box-shaped casing 50 also comprises a seat for the stable housing of this additional module. This makes it possible to standardise production, producing a single battery charger device provided with the appropriate electrical connector for delivering said additional module, which a user can add should he need the functions it provides.

The electronic control and command unit 60 is configured to monitor (in real time) a value of at least one operating parameter of the battery 10 (i.e., a value of a parameter that is indicative of an operating parameter of the battery) when it is connected to the battery charger device, for example such monitoring takes place via the electrical connectors of the battery charger device. In particular, a value of a parameter that can be measured at this electrical connector or communicated by the battery through this electrical connector is monitored (for example in the case of the temperature sensor). If necessary, this communication between the electronic control and command unit 60 and the electric connector may take place or may not take place at all by interposition of the electronic monitoring and command unit. For example, the electronic control and monitoring unit can be used to provide the electronic control and command unit with the value of the battery charge percentage, and possibly also the battery temperature value detected by the temperature sensor present in the battery.

In particular, in the illustrated embodiment, the electronic control and command unit is directly connected to the electronic monitoring and command unit, which can, for example, provide it with the value of the monitored operating parameter (between the temperature value and the recharge percentage).

The monitoring carried out by the electronic control and command unit 60 is cyclical with a preset sampling time.

The operating parameter of the battery monitored by the electronic control and command unit is at least one between a parameter indicative of the battery temperature and a parameter indicative of the charge percentage.

The electronic control and command unit 60 is configured to send this monitored value via the wireless transmitter 65 to a remote device 85, for example forming part of the kit. The remote device is an electronic device provided with a control unit or CPU and at least one wireless receiver, preferably a wireless transceiver. Such a remote device could be portable, such as a smartphone 90 or a tablet or a portable computer or an ad hoc-built portable wireless electronic device, or it could be non-portable, such as a remote desktop computer 95, preferably a remote server.

For example, the remote device may comprise a portable device, such as a smartphone 90 or a tablet or an ad hoc-built portable wireless electronic device, capable of communicating wirelessly with the transmitter of the recharging apparatus and configured to send the value of the monitored operating parameter to the remote computer, that is to the remote server, for example via a wireless connection, preferably an internet connection.

In the preferred embodiment, the remote device comprises both the portable device, e.g. in the form of the smartphone 90, and the remote desktop PC 95.

The wireless electronic device built ad hoc for the kit could therefore be a simple device provided with a transceiver and a control unit capable of receiving a signal from the transmitter device connected to the electronic control and command unit 60 to then forward it to the remote computer, or, alternatively or additionally, it could be provided with an interface device, such as a display or one or more light or acoustic emitters, and a control unit configured to process the data received from the transmitter and make them intelligible (possibly after processing them) to a user via the interface device.

Irrespective of the exact configuration of the remote device, the electronic control and command unit 60 is configured to send the value indicative of the operating parameter to the remote device cyclically (at a preset time interval) in real time during battery recharging.

"During battery recharging" means an interval of time in which the electrical connector of the battery is coupled to the electrical connector of the recharging device and simultaneously the recharging device is connected to the electric power source and sends electric energy to the battery.

In an embodiment not part of the present invention, the recharging apparatus may comprise a memory unit operationally connected to the electronic control and command unit 60, for example inserted in the additional module, in which the monitored values of the operating parameter during recharging are stored, so that they may be available also after the battery recharging step in case the remote device is not connected during the recharging step. In this case it is also preferable that the memory is of the non-volatile type or that alternatively it is volatile, but that an auxiliary battery is also provided (in the recharging device or in the additional module) so that the acquired data are not lost.

Irrespective of the configuration of the remote device, it is configured to monitor the value of the received operating parameter (i.e. the value of the parameter that is indicative of the received operating parameter) and to display the value of the received operating parameter (e.g. on a display of the remote device) and/or to generate an alert signal (intelligible to a user) based on the value of the received operating parameter.

The step of displaying the value of the operating parameter and/or generating an alert signal on it is preferably preceded by the step of calculating said operating parameter value based on the parameter value that is indicative of the received operating parameter.

The visualisation can take place via a display or light emitters (LEDs) coupled with a legend or scale printed on the body of the remote device.

The alert signal may be in various forms, e.g. it may be (at least one between) a predetermined switch-on pattern of the light emitter(s), it may be a predetermined switch-on pattern of the acoustic emitter(s), it may be in the form of a character string (preset or determined based on the value of the operating parameter), indicating the detected problem and/or in which it is suggested how to avoid a possible problem, which is shown on a display of the remote device, it may be in the form of a text message containing the aforesaid character string (e.g., sent from the remote computer to the smartphone or to the tablet or to the ad hoc portable device, or again generated and displayed by the same three portable devices indicated), it may be in the form of said (preset or determined based on the value of the operating parameter) character string that the remote device is configured to save as a reminder in a software of a digital calendar with which in such case the remote device must be provided (the remote device, or its control unit, is configured to run the software, or the computer code, of the digital calendar, for example said software being saved in a memory unit of the remote device), for example said remote device being one between a smartphone and a tablet.

Additionally, the alert signal can be generated in real time or alternatively the remote device can be configured to calculate a time interval based on the value of the operating parameter or to use a preset time interval, after which it generates the alert signal.

The battery 10 can be provided with an identification code of the single battery, that is different for each battery. In this case, the electronic control and command unit is also configured to detect this identification code and to send it to the remote device, which is configured to associate the detected identification code with the received operating parameter value(s) and to generate alert signals correlated to the identification code. This makes it possible to manage a plurality of batteries which are recharged with the same recharging device.

Some examples of configuring the generation of alert signals according to the operating parameters described above are described below. These configurations may be alternative or cumulative with each other.

Monitoring the parameter indicative of the charge percentage and the generation of an alert signal based on it, allow the user to be reminded to recharge the battery, both to avoid finding himself with a flat battery when he needs to use the tool, which would delay works, and to prevent the battery from being over-discharged, with the risk of damage and of premature loss of the storage capacity for which it was designed, i.e. its useful life would be reduced.

In particular, the remote device may be configured to calculate a battery discharge time interval at a preset residual percentage (which is thus a predetermined threshold value), based on a last received value of the parameter indicative of the charge percentage, and to selectively generate an alarm signal based on at least said discharge time interval. For example, after receiving the last value of the parameter indicative of the charge percentage, the remote device is configured to calculate said discharge time interval in the manner indicated above and to start said interval from the moment of receiving the last value of the parameter indicative of the charge percentage. The remote device can also be configured to calculate date and time of the moment in which the discharge time interval ends starting from the moment in which the last value was received.

The generation of the alert signal could be in real time, e.g. by means of a character string indicative of the value of the discharge time interval or indicative of the time and date of the end of the discharge time interval, which string can be shown on a display of the remote device. Alternatively or additionally, the alert signal may comprise the generation of a reminder in the digital calendar at the time and date of the end of that time interval.

Alternatively or additionally, the remote device could be configured to generate a timer of length equal to the discharge time interval, to activate said timer after receiving the last value of the parameter indicative of the charge percentage and to generate the alert signal at the end of this timer.

In this case the alert signal could be a character string indicating that battery recharging is required immediately, e.g. shown on the display, preferably in the form of a message, or an activation of the light emitter and/or of the acoustic emitter.

The last received value of the parameter indicative of the battery charge percentage can be determined mainly in two ways: either as the last received value before a time interval which is a multiple of the predetermined time interval by which the electronic control and command unit sends the value indicative of the battery charge percentage to the remote device and during which no signal is received from the electronic control and command unit containing the value of the parameter indicative of the battery charge percentage, or as the last received value before receiving a signal from the electronic control and command unit indicating that the battery has been removed from the battery charger device. In the latter case, the electronic control and command unit 60 must also be configured to detect the presence of a battery connected to the battery charger and being recharged. This can be done by the electronic control and command unit by monitoring the current flow from the power source to the battery; when this passage of current is interrupted, it means that the battery has been removed from the battery charger device.

Again when the operating parameter monitored by the electronic control and command unit 60 is the parameter indicative of the charge percentage, the remote device can be configured:
- to calculate a battery discharge time interval at a predetermined residual percentage based on a last received value of the parameter indicative of the charge percentage (in the same way as illustrated above for the other configuration of the remote device)
- to (cyclically) connect to an additional remote weather forecasting device,
- to monitor the status of the weather forecast for a next day, e.g. between 1 and 10 days, to the one on which the monitoring is taking place, said status being between cloudy, rainy and sunny, and
- to generate an alert signal when the forecast status for that next day is cloudy or sunny and when the residual charge expected for that day is less than a predetermined percentage.

This predetermined percentage may for example be higher than that discussed in the previous mode, e.g. it may be comprised between 80% and 50%.

The generation of the alert signal could be in real time, e.g. by means of a character string indicating that on a predetermined next day the weather will be suitable for the use of the tool (in particular in case of tools for the maintenance of green spaces) and that the battery should be charged by that day. This string can be shown on a display of the remote device. In addition or as an alternative, it can be provided that a reminder is generated in the digital calendar on the day before the predetermined day.

Alternatively, or in addition to the two modes described above, the operating parameter monitored by the electronic control and command unit 60 may be the parameter indicative of the battery temperature, and the remote device in that case may be configured to generate an alert signal when the value of the parameter indicative of the temperature exceeds a predetermined threshold value.

The alert signal could be, for example, a character string indicating that the battery temperature is excessive, shown on a display of the remote device.

Preferably, it may be appropriate to set three different threshold values to which different severities correspond, for example a first predetermined threshold value, a predetermined second threshold value lower than the first threshold value, and a third predetermined threshold value lower than the second threshold value. Each of these thresholds can be combined with an alert signal that is gradually more invasive from the third threshold towards the first threshold.

For example, the first threshold value may be a peak temperature value about which the user must be informed because the temperature may be dangerous and it is advisable to stop recharging immediately.

The electronic control and command unit 65 may be configured to cyclically detect the value of the parameter indicative of the battery temperature as soon as the battery is connected to the battery charger device (as soon as it is connected, the passage of electricity begins), preferably during the entire recharging time.

The remote device can be configured to generate a (second) preset alert signal (indicative of a too hot battery) when the temperature, in a predetermined time interval starting from the moment in which the battery is connected, e.g. between 10 and 60 seconds from the start of recharging, exceeds a predetermined threshold value, which can for example be second predetermined threshold value. The remote device can also be configured to calculate an average or median temperature in said predetermined time interval starting from the moment in which the battery is connected, to compare this calculated value with the (second) predetermined threshold value, and to generate the alert signal if the calculated value is greater than the (second) threshold value (less than the first preset threshold value).

In this case the alert signal, which is preferably sent in real time, is an indication that the battery is not suitable or that the location is too hot, e.g. an indication that the purchase of a more powerful battery is suggested.

Similarly to the previous cases, the alert signal may be a character string indicating that the battery is unsuitable and that is shown on a remote device display, or a predetermined pattern of acoustic and/or light signals generated by the respective light and acoustic signallers.

In addition to monitoring the temperature in the first recharging step, as mentioned above, it is possible to monitor it throughout the recharging moment and in this case the remote device is configured to calculate the average temperature, preferably the median temperature, obtained from all the values of the parameters indicative of the temperature that have been received from the moment in which recharging begins to the moment in which recharging is finished or in any case the moment in which the battery is removed from the battery charger device.

The remote device is then configured to compare the calculated temperature value with a preset threshold value, e.g. the third predetermined threshold value, and to generate a (third) preset alert signal when the calculated value exceeds this threshold value (and is lower than the second threshold value).

This (third) predetermined alert signal, which is preferably sent in real time, is an indication that the battery is potentially defective and dangerous.

Similarly to the previous cases, the alert signal may be a character string indicating that the battery is potentially defective and dangerous and that is shown on a remote device display, or a predetermined pattern of acoustic and/or light signals generated by the respective light and acoustic signallers. This character string is different from the previous ones in order to distinguish the three different types of problems encountered at the three different temperature thresholds.

The remote device can also be used to perform a battery profiling to monitor the ageing thereof and inform the user that the battery needs to be replaced.

For example, the remote device may be configured to store the values of the operating parameter during each connection of the battery to the battery charger device, to calculate a median or average value of the operating parameter based on the values acquired during a first set of connections, e.g., the first 5 or 10 connections, of the battery to the battery charger device, and to generate an alert signal when the average or median value of the operating parameter, in a successive connection of the battery to the battery charger device, deviates from the calculated average or median value by more than a predetermined percentage value.

The monitored operating parameter can be both the charge percentage and the temperature. In particular, in the case of the charge percentage, the value on which the average value is calculated is the recharging time, i.e. the time that lapses between the passage to a predetermined lower limit of battery charge percentage and a predetermined upper limit of battery charge.

In the case of temperature, the median temperature is preferably calculated from all temperature values received during the first set of connections of the battery to the battery charger device.

The remote device can also be configured to perform a usage profiling, understood as frequency of usage, made of the battery charger device so as to be able to provide the user with a reminder on when to recharge the battery and thus free the user from having to remember to recharge the battery.

In such a case, for example, the remote device may be configured (to store the moment in which the battery has reached a predetermined charge percentage) to calculate the time elapsed between two successive moments in which the battery has reached the predetermined charge percentage, to repeat this calculation for a predetermined subsequent number of recharges of the battery, to calculate an average value of the time intervals lapsed between two successive moments in which the battery has reached a predetermined charge percentage of the predetermined subsequent number of recharges, and to generate an alert signal based on this average time interval between two successive moments in which the battery has reached a predetermined charge percentage.

This alert signal can be in real time and in the form of a reminder saved in the digital calendar, which contains a character string indicating that the battery needs to be recharged by the calculated date. Or it may be an alert signal generated when, after the average time interval since the last recharge has lapsed, no battery connection to the battery charger device is detected.

This mode can also be recursive, for example, after a learning phase identifiable in the predetermined set of successive recharges, which are preferably a set of recharges starting from the first recharge, the remote device can be configured to calculate each successive time the time between two successive recharges and to recalculate the average time interval, in order to better adapt to the use made of the recharging device. In the previously described cases where a reminder is saved in the digital calendar, if the battery is subsequently connected to the battery charger before the reminder date and time, the electronic control and command unit is configured to detect the presence of reminders in the digital calendar and to delete them. This avoids unnecessary redundant alert signals.

The operation of the invention is as follows.

The invention thus conceived is susceptible to many modifications and variants, all falling within the scope of the appended claims. Moreover, all details can be replaced by other technically equivalent elements.

In practice, the materials used, as well as the contingent shapes and sizes, can be whatever according to the requirements without for this reason departing from the scope of protection of the following claims.

## Claims

1. Recharging apparatus (30) for electrically charging an electric battery (10) comprising:
- a battery charger device (35),
- an electronic control and command unit (60) galvanically connected to the battery charger device,
- a wireless transmitter (65) operationally connected to the electronic control and command unit, and
- a remote device (85),
wherein the electronic control and command unit (60) is configured to monitor a value indicative of an operating parameter of the battery when said battery is connected to the battery charger device and to send said value via the wireless transmitter (65),
wherein the electronic control and command unit (60) is configured to send the value indicative of the operating parameter to the remote device, and wherein the remote device is configured to monitor the received operating parameter value and to display the received operating parameter,
said recharging apparatus being **characterized by** the fact that the electronic control and command unit is configured to send the value indicative of the operating parameter to the remote device cyclically in real time during battery recharging.

2. Recharging apparatus (30) according to claim 1, wherein the operating parameter of the battery (10) is at least one between a parameter indicative of the battery temperature and a parameter indicative of the battery charge percentage.

3. Recharging apparatus (30) according to claim 1, wherein the operating parameter monitored by the electronic control and command unit (60) is the parameter indicative of the battery charge percentage, and wherein the remote device (85) is configured to calculate a battery discharge time interval at a predetermined residual percentage based on a last received value of the parameter indicative of the charge percentage and to selectively generate an alarm signal based on at least said discharge time interval.

4. Recharging apparatus (30) according to claim 1, wherein the operating parameter monitored by the electronic control and command unit is the parameter indicative of the battery charge percentage, and wherein the remote device (85) is configured:
- to calculate a battery discharge time interval at a predetermined residual percentage based on a last received value of the parameter indicative of the charge percentage,
- to connect to an additional remote weather forecasting device,
- to monitor the status of the weather forecast for a next day, said status being between cloudy, rainy and sunny, and
- to generate an alert signal when the forecast status for that next day is cloudy or sunny and when the residual charge expected for that day is less than a predetermined percentage.

5. Recharging apparatus (30) according to claim 1, wherein the operating parameter monitored by the electronic control and command unit (60) is the parameter indicative of the battery temperature and the remote device (85) is configured to generate an alert signal when the value of the parameter indicative of the temperature exceeds a predetermined threshold value.

6. Recharging apparatus (30) according to claim 5, wherein the electronic control and command unit (60) is configured to cyclically detect the value of the parameter indicative of the battery temperature as soon as the battery is connected to the battery charger device, and wherein the remote device (85) is configured to generate a preset alert signal when the temperature, in a predetermined time interval starting from the moment in which the battery is connected, exceeds a predetermined threshold value.

7. Recharging apparatus (30) according to claim 5 and/or 6, wherein the electronic control and command unit (60) is configured to cyclically detect the value of the parameter indicative of the battery temperature while recharging and to cyclically send the detected value to the remote device, and wherein the remote device (85) is configured to calculate the average or median temperature while recharging the battery and to generate a preset alert signal when the calculated average or median temperature exceeds a predetermined threshold value.

8. Recharging apparatus (30) according to claim 1, wherein the remote device (85) is configured to store the values of the operating parameter during each connection of the battery to the battery charger device, to calculate a median or average value of the operating parameter based on the values acquired during a first set of connections of the battery to the battery charger device, and to generate an alert signal when the average or median value of the operating parameter in a successive connection of the battery deviates from the calculated average or median value by more than a predetermined percentage value.

9. Recharging apparatus (30) according to claim 1, wherein the remote device (85) can be configured to calculate a time interval lapsed between two successive moments in which the battery has reached a predetermined charge percentage, to repeat this calculation for a predetermined number of successive recharges of the battery, to calculate an average value of the time intervals lapsed between two successive moments in which the battery has reached a predetermined charge percentage of the predetermined number of successive recharges and to generate an alert signal based on this average time interval between two successive moments in which the battery has reached a predetermined charge percentage.

10. Recharging apparatus (30) according to claim 1, wherein the alert signal is a string of characters indicative of the problem detected and/or in which it is suggested how to avoid a possible problem, wherein the remote device comprises a digital calendar software, and wherein the remote device is configured to save the string of characters in said digital calendar software as a reminder.

11. Recharging apparatus (30) according to claim 1, wherein the remote device can be configured to calculate a time interval based on the value of the operating parameter or to use a preset time interval, after which it generates the alert signal.

12. Kit (1) comprising an electric tool (5), provided with an electric battery (10) adapted to power it, and a recharging apparatus (30) according to claim 1 for electrically recharging said battery.

## Patentansprüche

1. Ladegerät (30) zum elektrischen Aufladen einer elektrischen Batterie (10), umfassend:
- eine Batterieladevorrichtung (35),
- eine elektronische Steuer- und Befehlseinheit (60), die galvanisch mit der Batterieladevorrichtung verbunden ist,
- einen drahtlosen Sender (65), der funktionsfähig mit der elektronischen Steuer- und Befehlseinheit verbunden ist, und
- eine entfernte Vorrichtung (85),
wobei die elektronische Steuer- und Befehlseinheit (60) konfiguriert ist, um einen Wert zu überwachen, der indikativ für einen Betriebsparameter der Batterie ist, wenn die Batterie mit der Batterieladevorrichtung verbunden ist, und um den Wert über den drahtlosen Sender (65) zu senden,
wobei die elektronische Steuer- und Befehlseinheit (60) konfiguriert ist, um den Wert, der indikativ für den Betriebsparameter ist, an die entfernte Vorrichtung zu senden, und wobei die entfernte Vorrichtung konfiguriert ist, um den empfangenen Betriebsparameterwert zu überwachen und den empfangenen Betriebsparameter anzuzeigen,
**dadurch gekennzeichnet, dass** die elektronische Steuer- und Befehlseinheit konfiguriert ist, um den Wert, der indikativ für den Betriebsparameter ist, beim Aufladen der Batterie zyklisch und in Echtzeit an die entfernte Vorrichtung zu senden.

2. Ladegerät (30) nach Anspruch 1, wobei der Betriebsparameter der Batterie (10) mindestens einer von einem Parameter, der indikativ für die Batterietemperatur ist, und einem Parameter, der indikativ für den Batterieladungsprozentsatz ist, ist.

3. Ladegerät (30) nach Anspruch 1, wobei der von der elektronischen Steuer- und Befehlseinheit (60) überwachte Betriebsparameter der Parameter ist, der indikativ für den Batterieladungsprozentsatz ist, und wobei die entfernte Vorrichtung (85) konfiguriert ist, um ein Batterieentladungszeitintervall bei einem vorbestimmten restlichen Prozentsatz basierend auf einem zuletzt empfangenen Wert des Parameters, der indikativ für den Ladungsprozentsatz ist, zu berechnen und selektiv ein Alarmsignal basierend auf zumindest dem Entladungszeitintervall zu erzeugen.

4. Ladegerät (30) nach Anspruch 1, wobei der von der elektronischen Steuer- und Befehlseinheit überwachte Betriebsparameter der Parameter ist, der indikativ für den Batterieladungsprozentsatz ist, und wobei die entfernte Vorrichtung (85) zu Folgendem konfiguriert ist:
- Berechnen eines Batterieentladungszeitintervalls bei einem vorbestimmten restlichen Prozentsatz basierend auf einem zuletzt empfangenen Wert des Parameters, der indikativ für den Ladungsprozentsatz ist,
- Verbinden mit einer zusätzlichen entfernten Wettervorhersagevorrichtung,
- Überwachen des Status der Wettervorhersage für einen nächsten Tag, wobei dieser Status zwischen bewölkt, regnerisch und sonnig ist, und
- Erzeugen eines Warnsignals, wenn der Vorhersagestatus für diesen nächsten Tag bewölkt oder sonnig ist und wenn die für diesen Tag erwartete restliche Ladung unter einem vorbestimmten Prozentsatz ist.

5. Ladegerät (30) nach Anspruch 1, wobei der von der elektronischen Steuer- und Befehlseinheit (60) überwachte Betriebsparameter der Parameter ist, der indikativ für die Batterietemperatur ist, und die entfernte Vorrichtung (85) konfiguriert ist, um ein Warnsignal zu erzeugen, wenn der Wert des Parameters, der indikativ für die Temperatur ist, einen vorbestimmten Schwellenwert überschreitet.

6. Ladegerät (30) nach Anspruch 5, wobei die elektronische Steuer- und Befehlseinheit (60) konfiguriert ist, um den Wert des Parameters, der indikativ für die Batterietemperatur ist, zyklisch zu erfassen, sobald die Batterie mit der Batterieladevorrichtung verbunden ist, und wobei die entfernte Vorrichtung (85) konfiguriert ist, um ein voreingestelltes Warnsignal zu erzeugen, wenn die Temperatur in einem vorbestimmten Zeitintervall, beginnend mit dem Moment, in dem die Batterie verbunden ist, einen vorbestimmten Schwellenwert überschreitet.

7. Ladegerät (30) nach Anspruch 5 und/oder 6, wobei die elektronische Steuer- und Befehlseinheit (60) konfiguriert ist, um den Wert des Parameters, der indikativ für die Batterietemperatur ist, beim Aufladen zyklisch zu erfassen und den erfassten Wert zyklisch an die entfernte Vorrichtung zu senden, und wobei die entfernte Vorrichtung (85) konfiguriert ist, um die Durchschnitts- oder Mediantemperatur beim Aufladen der Batterie zu berechnen und ein voreingestelltes Warnsignal zu erzeugen, wenn die berechnete Durchschnitts- oder Mediantemperatur einen vorbestimmten Schwellenwert überschreitet.

8. Ladegerät (30) nach Anspruch 1, wobei die entfernte Vorrichtung (85) konfiguriert ist, um die Werte des Betriebsparameters bei jeder Verbindung der Batterie mit der Batterieladevorrichtung zu speichern, um einen Median- oder Durchschnittswert des Betriebsparameters basierend auf den Werten zu berechnen, die während eines ersten Satzes von Verbindungen der Batterie mit der Batterieladevorrichtung erfasst werden, und um ein Warnsignal zu erzeugen, wenn der Durchschnitts- oder Medianwert des Betriebsparameters bei einer nachfolgenden Verbindung der Batterie von dem berechneten Durchschnitts- oder Medianwert um mehr als einen vorbestimmten Prozentwert abweicht.

9. Ladegerät (30) nach Anspruch 1, wobei die entfernte Vorrichtung (85) konfiguriert werden kann, um ein Zeitintervall zu berechnen, das zwischen zwei aufeinanderfolgenden Zeitpunkten verstrichen ist, in denen die Batterie einen vorbestimmten Ladungsprozentsatz erreicht hat, um diese Berechnung für eine vorbestimmte Anzahl von aufeinanderfolgenden Aufladungen der Batterie zu wiederholen, um einen Durchschnittswert der Zeitintervalle zu berechnen, die zwischen zwei aufeinanderfolgenden Zeitpunkten verstrichen sind, in denen die Batterie einen vorbestimmten Ladungsprozentsatz der vorbestimmten Anzahl von aufeinanderfolgenden Aufladungen erreicht hat, und um ein Warnsignal basierend auf diesem durchschnittlichen Zeitintervall zwischen zwei aufeinanderfolgenden Zeitpunkten, in denen die Batterie einen vorbestimmten Ladungsprozentsatz erreicht hat, zu erzeugen.

10. Ladegerät (30) nach Anspruch 1, wobei das Warnsignal eine Zeichenkette ist, die indikativ für das erkannte Problem ist, und/oder in der suggeriert wird, wie ein mögliches Problem vermieden wird, wobei die entfernte Vorrichtung eine digitale Kalendersoftware umfasst, und wobei die entfernte Vorrichtung konfiguriert ist, um die Zeichenfolge als Erinnerung in der digitalen Kalendersoftware zu speichern.

11. Ladegerät (30) nach Anspruch 1, wobei die entfernte Vorrichtung konfiguriert werden kann, um ein Zeitintervall basierend auf dem Wert des Betriebsparameters zu berechnen oder ein voreingestelltes Zeitintervall zu verwenden, nach dem es das Alarmsignal erzeugt.

12. Kit (1), umfassend ein Elektrowerkzeug (5), das mit einer elektrischen Batterie (10) versehen ist, die angepasst ist, um es mit Energie zu versorgen, und ein Ladegerät (30) nach Anspruch 1 zum elektrischen Aufladen der Batterie.

## Revendications

1. Dispositif de recharge (30) destiné à charger de manière électrique une batterie électrique (10) comprenant :
- un dispositif de charge de batterie (35),
- une unité de commande et de contrôle électronique (60) reliée galvaniquement au dispositif de charge de batterie,
- un émetteur sans fil (65) connecté de manière opérationnelle à l'unité de commande et de contrôle électronique, et
- un dispositif à distance (85),
dans lequel l'unité de commande et de contrôle électronique (60) est configurée pour surveiller une valeur indicative d'un paramètre de fonctionnement de la batterie lorsque ladite batterie est connectée au dispositif de charge de batterie et pour envoyer ladite valeur par l'émetteur sans fil (65),
dans lequel l'unité de commande et de contrôle électronique (60) est configurée pour envoyer la valeur indicative du paramètre de fonctionnement au dispositif à distance, et dans lequel le dispositif à distance est configuré pour surveiller la valeur du paramètre de fonctionnement reçue et pour afficher le paramètre de fonctionnement reçu,
ledit dispositif de recharge étant **caractérisé en ce que** l'unité de commande et de contrôle électronique est configurée pour envoyer la valeur indicative du paramètre de fonctionnement au dispositif à distance de manière cyclique en temps réel pendant la recharge de la batterie.

2. Dispositif de recharge (30) selon la revendication 1, dans lequel le paramètre de fonctionnement de la batterie (10) est au moins un parmi un paramètre indicateur de la température de la batterie et un paramètre indicateur du pourcentage de charge de la batterie.

3. Dispositif de recharge (30) selon la revendication 1, dans lequel le paramètre de fonctionnement surveillé par l'unité de commande et de contrôle électronique (60) est le paramètre indicateur du pourcentage de charge de la batterie, et dans lequel le dispositif à distance (85) est configuré pour calculer un intervalle de temps de décharge de la batterie à un pourcentage résiduel prédéterminé sur la base d'une dernière valeur reçue du paramètre indicateur du pourcentage de charge et pour générer de manière sélective un signal d'alarme sur la base d'au moins ledit intervalle de temps de décharge.

4. Dispositif de recharge (30) selon la revendication 1, dans lequel le paramètre de fonctionnement surveillé par l'unité de commande et de contrôle électronique est le paramètre indicateur du pourcentage de charge de la batterie, et dans lequel le dispositif à distance (85) est configuré :
- pour calculer un intervalle de temps de décharge de la batterie à un pourcentage résiduel prédéterminé sur la base d'une dernière valeur reçue du paramètre indicateur du pourcentage de charge,
- pour se connecter à un dispositif supplémentaire de prévision météorologique à distance,
- pour surveiller l'état des prévisions météorologiques du lendemain, ledit état pouvant être nuageux, pluvieux ou ensoleillé, et
- pour générer un signal d'alerte lorsque les prévisions météorologiques du lendemain sont nuageuses ou ensoleillées et lorsque la charge résiduelle prévue pour cette journée est inférieure à un pourcentage prédéterminé.

5. Dispositif de recharge (30) selon la revendication 1, dans lequel le paramètre de fonctionnement surveillé par l'unité de commande et de contrôle électronique (60) est le paramètre indicateur de la température de la batterie et le dispositif à distance (85) est configuré pour générer un signal d'alerte lorsque la valeur du paramètre indicateur de la température dépasse une valeur seuil prédéterminée.

6. Dispositif de recharge (30) selon la revendication 5, dans lequel l'unité de commande et de contrôle électronique (60) est configurée pour détecter de manière cyclique la valeur du paramètre indicateur de la température de la batterie dès que la batterie est connectée au dispositif de charge de la batterie, et dans lequel le dispositif à distance (85) est configuré pour générer un signal d'alerte prédéfini lorsque la température, dans un intervalle de temps prédéterminé à partir du moment où la batterie est connectée, dépasse une valeur seuil prédéterminée.

7. Dispositif de recharge (30) selon la revendication 5 et/ou 6, dans lequel l'unité de commande et de contrôle électronique (60) est configurée pour détecter de manière cyclique la valeur du paramètre indicateur de la température de la batterie pendant la recharge et pour envoyer de manière cyclique la valeur détectée au dispositif à distance, et dans lequel le dispositif à distance (85) est configuré pour calculer la température moyenne ou médiane pendant la recharge de la batterie et pour générer un signal d'alerte prédéfini lorsque la température moyenne ou médiane calculée dépasse une valeur seuil prédéterminée.

8. Dispositif de recharge (30) selon la revendication 1, dans lequel le dispositif à distance (85) est configuré pour stocker les valeurs du paramètre de fonctionnement pendant chaque connexion de la batterie au dispositif de charge de la batterie, pour calculer une valeur médiane ou moyenne du paramètre de fonctionnement sur la base des valeurs acquises pendant une première série de connexions de la batterie au dispositif de charge de la batterie, et pour générer un signal d'alerte lorsque la valeur moyenne ou médiane du paramètre de fonctionnement lors d'une connexion successive de la batterie s'écarte de la valeur moyenne ou médiane calculée de plus d'une valeur en pourcentage prédéterminée.

9. Dispositif de recharge (30) selon la revendication 1, dans lequel le dispositif à distance (85) peut être configuré pour calculer un intervalle de temps écoulé entre deux moments successifs auxquels la batterie a atteint un pourcentage de charge prédéterminé, pour répéter ce calcul pour un nombre prédéterminé de recharges successives de la batterie, pour calculer une valeur moyenne des intervalles de temps écoulés entre deux moments successifs où la batterie a atteint un pourcentage de charge prédéterminé du nombre prédéterminé de recharges successives et générer un signal d'alerte basé sur cet intervalle de temps moyen entre deux moments successifs où la batterie a atteint un pourcentage de charge prédéterminé.

10. Dispositif de recharge (30) selon la revendication 1, dans lequel le signal d'alerte est une chaîne de caractères indiquant le problème détecté et/ou dans lequel il est suggéré un moyen d'éviter un problème éventuel, dans lequel le dispositif à distance comprend un logiciel de calendrier numérique, et dans lequel le dispositif à distance est configuré pour enregistrer la chaîne de caractères dans ledit logiciel de calendrier numérique en tant que rappel.

11. Dispositif de recharge (30) selon la revendication 1, dans lequel le dispositif à distance peut être configuré pour calculer un intervalle de temps sur la base de la valeur du paramètre de fonctionnement ou pour utiliser un intervalle de temps prédéfini, après quoi il génère le signal d'alerte.

12. Kit (1) comprenant un outil électrique (5), équipé d'une batterie électrique (10) adaptée pour l'alimenter, et un dispositif de recharge (30) selon la revendication 1 destiné à recharger de manière électrique ladite batterie.
